# EUROPÄISCHE PATENTSCHRIFT

(11) **EP 1 603 011 B1**
(45) Veröffentlichungstag und Bekanntmachung des Hinweises auf die Patenterteilung: **27.02.2008**
(21) Anmeldenummer: 04102441.5
(22) Anmeldetag: 01.06.2004
(51) Int. Cl.: G06F 3/00, G06F 1/32

(54) **Leistungseinsparung in einer Koordinateneingabevorrichtung**
Power saving in coordinate input device
Économie d'énergie dans un dispositif d'entrée de coordonnées

(43) Veröffentlichungstag der Anmeldung: 07.12.2005
(73) Patentinhaber: Swisscom Mobile AG, 3050 Bern (CH)
(72) Erfinder: Ritter, Rudolf, 3052 Zollikofen (CH); Lauper, Eric, 3014 Bern (CH)
(74) Vertreter: Scheuzger, Beat Otto

(56) Entgegenhaltungen:
- WO-A-94/09472
- WO-A-97/37339
- US-A- 5 751 260
- US-A- 5 790 099
- US-A- 5 832 296
- US-B1- 6 526 159

## Beschreibung

Die Erfindung betrifft ein Verfahren und eine Vorrichtung zur Erfassung eines Koordinateneingabepunktes. Die Erfindung betrifft insbesondere ein Verfahren und eine Vorrichtung zur Erfassung eines Koordinateneingabepunktes mit einer tragbaren Vorrichtung, wobei die tragbaren Vorrichtung zumindest einen aktivierbaren Sensor und eine Kommunikationsschnittstelle aufweist, und wobei der Koordinateneingabepunkt mittels der Erfassung der Blickrichtung eines menschlichen Auges bestimmt wird und der Koordinateneingabepunkt durch Aktivierung des Sensors selektiert wird.

Bekannt sind auf diesem Gebiet u.a. an der menschlichen Hand befindliche Einrichtungen, die der Führung der Mausbewegung dienen. Das Patent US 5,832,296 beschreibt ein "wearable universal user interface". In einer Ausführungsform werden ein Ring, umfassend Sensoren (wie ein X-Y-Kraftsensor, ein Drucksensor und/oder ein Temperatursensor), eine drahtlose Schnittstelle und eine Verarbeitungselektronik beschrieben. Es wird beschrieben, wie ein solcher Ring für die Steuerung von verschiedenen elektronischen Geräten wie Fernseher und/oder Computer verwendet werden kann. Insbesondere wird die Anwendung des Rings als drahtlose Computer-Maus beschrieben. Das Patent US 4,954,817 beschreibt ein X-Y Eingabegerät, umfassend ein Miniaturtablett, welches auf dem Zeigefinger getragen wird und einen Miniaturzeiger, welcher auf dem Daumen getragen wird. Der Vorteil der Erfindung liegt darin, dass ein Anwender einen Maus-Zeiger sehr schnell bedienen kann. Die Patentanmeldung WO 02/058002 A1 beschreibt eine am Zeigefinger und Mittelfinger getragene Maus, umfassend einen Ball für die Steuerung (mit dem Daumen) eines Maus-Zeigers und Schalter für die Bedienung einer linken und einer rechten Maus-Taste.

Die Patentanmeldung US 2003/0038783 A1 beschreibt eine Computer-Maus, welche an einer Hand festgeschnallt wird. Auf dem Zeigfinger und dem Mittelfinger werden Miniaturgürtel angebracht, welche Schalter für die Bedienung der linken und der rechten Maus-Taste enthalten. Die Patentanmeldung DE 37 09 464 A1 beschreibt eine X-Y-Eingabevorrichtung für Computer, umfassend einen am Zeigefinger getragenen Ring, welcher die Lage bzw. Richtung in Bezug auf eine Empfangsvorrichtung an diese drahtlos übermittelt. Ein Maus-Zeiger kann so allein durch Bewegen des Zeigefingers gesteuert werden. Die Patentanmeldung DE 100 40 812 A1 beschreibt eine Computer-Maus, umfassend einen ersten Sensor, beispielsweise am Zeigefinger angebracht, für eine Identifikationsfunktion und umfassend einen zweiten Sensor, beispielsweise am Mittelfinger angebracht, für eine Steuerungsfunktion des Maus-Zeigers als auch für eine Klickfunktion. Die Steuerungsfunktion des Maus-Zeigers erfolgt über einen Ball-Sensor durch Bewegen des Balls auf einer Unterlage. Die Steuerungselektronik ist in einem Armbandgelenk untergebracht und umfasst bevorzugt auch eine drahtlose Schnittstelle.

Die Patentschrift US 5,790,099 beschreibt eine Vorrichtung zur Erfassung der Blickrichtung eines Benutzers, wobei mittels der Blickrichtung ein Cursor eines Computer Desktops steuerbar ist, und wobei mittels der Betätigung einer Taste einer Tastatur eine der Cursorposition zugeordnete Fuktion auslösbar ist. Es ist u.a. ein Nachteil, dass zur Darstellung des Computer Desktops eine zusätzliche Vorrichtung angebracht werden muss.

In den Patentanmeldungen WO 94/09472 und WO 97/37339 wird eine Videoanzeigevorrichtung, die Bildsignale direkt auf die Retina eines Betrachters projizieren kann, eine sogenannter Retinal-Scanning-Display beschrieben. Ein Retinal-Scanning-Display kann über ein Videodateninterface mit Videodaten versorgt werden, beispielsweise in Form eines RGB-Signals, eines NTSC-Signals, eines VGA-Signals oder eines anderen formatierten farbigen oder monochromen Video- oder Grafiksignals. Der Fachmann wird verstehen, dass es vorteilhaft sein kann, den in den erwähnten Patentschriften WO 94/09472 und WO 97/37339 beschriebenen Retinal-Scanning-Display, respektive das dort beschriebene Videodateninterface, so anzupassen, dass es auch andere Formate von Fernsehsignalen und insbesondere digitale Videodaten effizient entgegennehmen kann. Mittels eines Schnittstellenmoduls können Fernsehsignale und Videodaten aber auch geeignet an die Videoschnittstelle angepasst werden, respektive erhaltene Videodaten so umgewandelt werden, dass sie an die Videoschnittstelle angelegt werden können. Es ist eine Aufgabe dieser Erfindung, einen neues Verfahren und eine Vorrichtung zur Erfassung eines Koordinateneingabepunktes zu schaffen, wobei der Koordinateneingabepunkt mittels der Erfassung der Blickrichtung eines menschlichen Auges bestimmt wird und der Koordinateneingabepunkt durch die Aktivierung eines Sensors selektiert wird.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

An dieser Stelle soll festgehalten werden, dass sich die vorliegende Erfindung neben dem erfindungsgemässen Verfahren auch auf eine entsprechende Vorrichtung bezieht.

Insbesondere werden diese Ziele durch die Erfindung dadurch erreicht, dass zur Erfassung eines Koordinateneingabepunktes mit einer tragbaren Vorrichtung, welche zumindest einen aktivierbaren Sensor und eine Kommunikationsschnittstelle aufweist, der Koordinateneingabepunkt mittels der Erfassung der Blickrichtung eines menschlichen Auges bestimmt, und durch Aktivierung des Sensors an der tragbaren Vorrichtung selektiert wird, wobei der Koordinateneingabepunkt auf einem Display dargestellt wird, und wobei mit der Ausrichtung des Auges auf ein bestimmtes Fenster auf dem Display die tragbare Vorrichtung aus einem Idle-Modus aktiviert wird. Dies bedeutet beispielsweise, dass der Koordinateneingabepunkt (wie z.B. ein Mauszeiger) ständig der Blickrichtung des Auges folgt. Grundsätzlich befindet sich jedoch dieser Mauszeiger in einem energiesparenden sogenannten Idle-Modus, beispielsweise durch automatische Umschaltung in den Idle-Modus nach Ablauf eines bestimmten Zeitintervalls ohne Aktivierung des Sensors. Bei Ausrichtung der Blickrichtung auf eine bestimmte Schaltfläche des Displays wird ein Signal zur Aktivierung der Maus und also zum Verlassen des Idle-Modus erzeugt. Der Vorteil dieser Erfindung liegt unter anderem insbesondere darin, dass durch die genannte Funktion eine bedeuten längere Betriebszeit erreicht werden kann.

Der Betrachter kann durch die Aktivierung eines Sensors einer tragbaren Vorrichtung, wie beispielsweise eines Rings welcher beispielsweise auf einen Finger gezogen wird, den bestimmten Koordinateneingabepunkt selektieren, was z.B. der Auslösung eines Maus-Klicks entsprechen kann. Wie von herkömmlichen Kommunikationseinrichtungen bekannt, kann mit der Erfassung eines Koordinateneingabepunkts ein Vorgang (z.B. Dateiaufruf, Kommunikationsvorgang, Bildveränderung o.ä.) gestartet werden und auf dem veränderten Bild auf dem Display kann der Vorgang der Erfassung eines Koordinateneingabepunkts wiederholt werden. Daher liegt unter anderem ein weiterer Vorteil dieser Erfindung darin, dass die tragbare Vorrichtung beispielsweise diskret, leicht und/oder persönlich ausgestaltet werden kann, beispielsweise als ein an einem Finger getragener Ring. Ein wiederum weiterer Vorteil dieser Erfindung liegt unter anderem darin, dass die Erfassung eines Koordinateneingabepunkts mit minimaler Beanspruchung der Hand eines Benutzers und praktisch als handfree Funktion durchgeführt werden kann.

In einer Ausführungsvariante erfolgt die Aktivierung der Maus erst dann, wenn der Blick eine während einer bestimmbarer Zeit auf der Schaltfläche verweilt. Dies hat den Vorteil, dass die Maus nicht unerwünscht bei einem "Streifen" der Schaltfläche mit dem Blick aktiviert wird. Die Erfindung kann so ausgestaltet sein, dass eine anklickbare Schaltfläche unabhängig von anderen Darstellungen stets auf dem Display vorhanden ist, d.h., dass diese Schaltfläche entweder ständig dargestellt wird oder auch neben dem veränderlichen Teil des Displays auf einem unveränderlichen Teil des Displays dargestellt ist. Die Schaltfläche kann aber auch nur zu bestimmten Zeiten oder abhängig von anderen verschiedenen Eingangssignalen auf dem Display erscheinen. Ebenfalls kann sie auf unterschiedlichen Positionen auf dem Bildschirm dargestellt werden. Die Ausführungsvariante hat u.a. den Vorteil, dass eine dynamische Anpassung von anklickbaren Schaltflächen durchgeführt werden kann und dass in einem System-Lernmodus individuelle Anpassungen der Darstellung der genannten Schaltfläche ermöglicht werden.

In einer Ausführungsvariante wird die Erkennung der Blickrichtung des Auges mit einem Eye-Tracking-System durchgeführt. Dabei wird mittels einer optischen Einrichtung erkannt, wohin der Blick des Auges gerichtet ist. Dieses Signal über die Position des Blickpunktes kann in die aktuelle Koordinatenangabe für den Maus-Zeiger umgewandelt werden, so dass sich der Maus-Zeiger immer an der Position des Blickpunktes auf dem Bildschirm befindet. Die Ausführungsvariante hat u.a. den Vorteil, dass handelsübliche Systeme für die Erfassung der Blickrichtung des Auges verwendet werden können.

In einer anderen Ausführungsvariante wird das Display durch die Projektion von Bilddaten mittels einem Retinal-Scanning-Display in das Auge erzeugt. Allerdings kann die Erfindung auch mit einem herkömmlichen gegenständlichen Display durchgeführt werden. Wird ein Retinal-Scanning-Display verwendet, dann lässt sich in einer zusätzlichen Ausführungsform die Blickrichtung des Auges zugleich mit dem Retinal-Scanning-Display über die Erfassung der Retinastruktur des Auges bestimmen, beispielsweise durch Verfolgung des so genannten gelben Flecks (Macula, Netzhautregion des schärfsten Sehens welche auf der optischen Achse im Zentrum der Retina liegt). Durch eine solche Erfassung der Retinastruktur kann das oben beschriebene Eye-Tracking-System realisiert werden. Die Erfassung erfolgt beispielsweise über ein lichtempfinliches Element, welches bevorzugt in derselben optischen Achse wie das für die Projektion der Bilddaten verwendete lichtemitierende Element angebracht ist, womit die für die Projektion verwendeten optischen Elemente wie beispielsweise MEMS Spiegel auch für die Erfassung der Retinastruktur verwendbar sind. Eine Auswahl der Funktionen der Maus kann mit dem oben beschriebenen System der Mauszeigerbewegung und des anschliessenden Maus-Klicks auf eine Schaltfläche erfolgen. Nach Anklicken der Schaltfläche können z.B. mehrere weitere Schaltflächen auf dem Display dargestellt werden, die unterschiedliche Maus-Funktionen beschreiben. Nach dem oben beschriebenen Anklicken einer solchen weiteren Schaltfläche kann das Signal für die Änderung einer Maus-Funktion ausgelöst werden. Diese Ausführungsvariante hat u.a. den Vorteil, dass die genannten Elemente eine intuitive Mausssteuerung stark unterstützen.

In einer weiteren Ausführungsvariante erfolgt die Aktivierung des Sensors des tragbaren Geräts beispielsweise mittels mechanischer, optischer, kapazitiver, induktiver und/oder thermischer Mittel. Beispielsweise kann ein optischer Sensor die Annäherung eines Fingers detektieren oder ein Berührungssensor kann Änderungen einer Impedanz bestimmen. Diese Ausführungsvariante hat den Vorteil, dass der Sensor für einen bestimmten Verwendungszweck optimiert werden kann.

In einer weiteren Ausführungsvariante umfasst die tragbare Vorrichtung einen Energiespeicher und/oder eine Verarbeitungselektronik. Diese Ausführungsvariante hat den Vorteil, dass beispielsweise Sensorsignale schon im tragbaren Gerät vorverarbeitet werden können.

In einer weiteren Ausführungsvariante erfolgt der Datenaustausch über die Kommunikationsschnittstelle des tragbaren Geräts über Bluetooth, über eine RFID Schnittstelle, über Funk oder eine andere drahtlose Kommunikationsmöglichkeit. Weitere Geräte wie beispielsweise ein Rechner enthalten ebenfalls eine zur Kommunikationsschnittstelle am tragbaren Gerät kompatible Kommunikationsschnittstelle. Beispielsweise kann das tragbare Gerät eine RFID Schnittstelle umfassen und einen so genannten RFID Transponder, wobei durch den aktivierbaren Sensor von einer ersten RFID Identität auf eine zweite RFID Identität umgeschaltet werden kann. Beispielsweise über einen RFID Transceiver des Rechners kann die RFID Identität zu bestimmten Zeitpunkten, beispielsweise nach Ablauf von Zeitintervallen von wenigen Zehntelsekunden, ausgelesen werden, wobei beispielsweise die zweite RFID Identität der Aktivierung des Sensors entspricht. Unter Verwendung einer RFID Schnittstelle lässt sich so ein tragbares Gerät mit minimaler oder mit gar keiner internen Stromversorgung realisieren. In einer weiteren Ausgestaltung kann die Kommunikation aber auch kabelgebunden erfolgen. Über die Kommunikationsschnittstellen am tragbaren Gerät und am Rechner wird die Information über die Betätigung des Sensors am tragbaren Gerät von diesem an den Rechner weitergeleitet. Im Rechner wird aus der Information über den Mausklick das Signal zur Betätigung der Schaltfläche generiert. Die Kommunikation kann zwischen dem Rechner und mehreren tragbaren Geräten gleichzeitig erfolgen, wobei jedem tragbaren Gerät ein Display zugeordnet ist. Dies hat den Vorteil, dass für mehrere Displays nur ein zentraler Rechner benötigt wird. Die Ausführungsvariante hat u.a. den Vorteil, dass mehrere Systeme gemäss einem definierten Konzept nebeneinander betrieben werden können ohne dass sie sich gegenseitig stören.

In einer Ausführungsvariante kommuniziert sowohl das Eye Tracking System als auch die Einrichtung zur Durchführung des Retinal Scanning mit dem Rechner kontaktlos über eine Bluetooth-, RFID- oder eine andere drahtlose Schnittstelle. Dies ist insbesondere für die Anwendung von Vorteil, bei der Rechner und Display vom Auge des Betrachters einen grösseren räumlichen Abstand aufweisen. Allerdings kann die Kommunikation auch kabelgebunden erfolgen.

Für die Durchführung des Verfahrens zur Steuerung der Mauszeigerbewegung und des Maus-Klicks auf einem mit einem Rechner verbundenen Display ist erfindungsgemäss eine Einrichtung vorgesehen, die aus einem Rechner, einem mit diesem Rechner verbundenen Display, einem an einem Finger tragbaren Ring, der zumindest einen aktivierbaren Sensor und eine Kommunikationsschnittstelle aufweist sowie aus einer Steuerungseinrichtung für eine Mauszeigerbewegung mittels Blickrichtung zumindest eines menschlichen Auges und einer Kommunikationseinrichtung zwischen Ring und Rechner besteht.

In einer wieder anderen Ausführungsvariante ist in einer Ausgestaltung der Erfindung direkt vor dem Auge des Benutzers eine Einrichtung zur Durchführung des Eye-Tracking-Systems angeordnet. Ebenfalls vor dem Auge des Benutzers kann eine Einrichtung zur Erstellung des Retinal-Scanning-Displays angeordnet sein. Das Display ist in diesem Fall ein mittels der Methode des Retinal-Scanning in das Auge projiziertes Bild. Die Kommunikationseinrichtung zwischen der Kommunikationsschnittstelle am Ring und dem Rechner ist vorteilhafterweise eine Bluetooth-, RFID- oder eine andere drahtlose Kommunikationseinrichtung. Allerdings ist auch hier eine kabelgebundene Kommunikation realisierbar.

In einer weiteren Ausführungsvariante besteht der Energiespeicher der tragbaren Vorrichtung aus einem Akkumulator oder aus einem Nanokraftwerk oder aus einer Brennstoffzelle oder auch aus deren Kombinationen. Die Erfindung kann so ausgestaltet sein, dass die Einrichtung zur Erstellung des Retinal-Scaning-Displays und die Einrichtung zur Durchführung des Eye-Tracking-Systems in einer am Kopf eines Benutzers angeordneten Einrichtung integriert sind.

In einer weiteren Ausführungsform kann auch der Rechner mit in dieser am Kopf eines Benutzers angeordneten Vorrichtung integriert sein. Vorteilhafterweise ist diese am Kopf eines Benutzers angeordneten Einrichtung eine Brille.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt eine erfindungsgemässe Einrichtung zur Erfassung eines Koordinateneingangspunktes 15 eines Displays 2, wobei das Display 2 als ein Bildschirm vor dem Auge 8 angeordnet ist.
Figur 2 zeigt eine erfindungsgemässe Einrichtung zur Erfassung eines Koordinateneingangspunktes 15 eines Displays 2, wobei das Display 2 mittels eines Retinal-Scaning-Displays in das Auge 8 projiziert wird.
Figur 3 illustriert ein Display 2.
Figur 4 zeigt eine Brille, in die Bestandteile der erfindungsgemässen Einrichtung integriert sind.

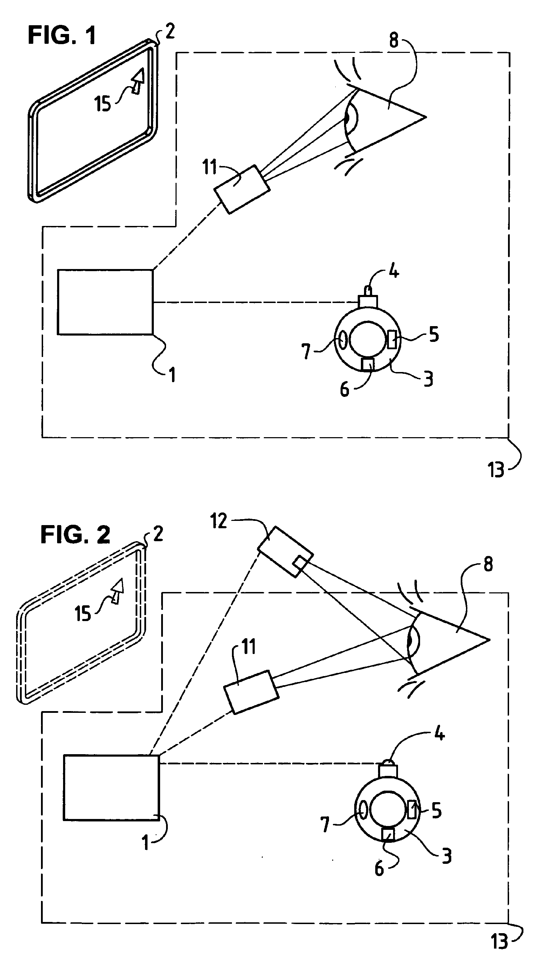

In Figur 1 ist ein mit einem Rechner 1 verbundenes Display 2, ein Ring 3 mit einem aktivierbaren Sensor 4, einer kontaktlosen Kommunikationsschnittstelle 5, einem Energiespeicher 6 und einer Verarbeitungselektronik 7 sowie einem menschlichen Auge 8 und einer Einrichtung zur Durchführung des Eye-Tracking-Systems 11 dargestellt. Die Kommunikationsschnittstelle 5 kann eine oder mehrere Schnittstellen umfassen, insbesondere eine Geräteschnittstelle, zum Beispiel eine kontaktlose Schnittstelle, beispielsweise eine Infrarotschnittstelle, zum Beispiel eine High-Speed-Infrared (HSIR)-Schnittstelle oder eine IrDA-Schnittstelle (Infrared-Data-Association), eine induktive Schnittstelle, zum Beispiel eine Radio-Frequency-Identification (RFID)-Schnittstelle, eine Home RF (Radio-Frequency)-Schnittstelle, eine Digital European Cordless-Telecommunications-(DECT)-Schnittstelle oder eine andere Cordless-Telecommunications-System (CTS)-Schnittstelle, oder eine hochfrequente Funkschnittstelle, zum Beispiel eine sogenannte Bluetooth-Schnittstelle". Der Rechner 1 kann z.B. ein Personal Computer (PC) oder ein PDA (Personal-Digital-Assistant) oder auch ein Mobilfunkgerät o.ä. sein. Der Rechner 1 kann z.B. mittels der Vorrichtung zur Durchführung des Eye-Tracking-Systems 11 die Augenbewegung verfolgen und ständig die Positionsdaten der Blickrichtung des Auges erfassen. Diese Positionsdaten wird dem Rechner 1 übermittelt, der entsprechend dieser Positionsdaten beispielsweise einen Mauszeiger 15 auf dem Display 2 positioniert. So folgt der Mauszeiger 15 ständig der Augenbewegung auf dem Display 2. Ist der Blick des Benutzers z.B. auf eine bestimmte Schaltfläche 9 gerichtet, so befindet sich auch der Mauszeiger 15 auf dieser Schaltfläche 9.

Mittels Aktivierung des Sensors 4 am Ring 3, welche Aktivierung beispielsweise durch mechanischen Druck auf einen Schalter oder durch die Messung der Impedanz einer Berührungsfläche oder durch optische Detektion der Annährung eines Fingers oder durch die Messung von thermischen Veränderungen erfolgen kann, wird über eine Kommunikationsschnittstelle 5 an den Rechner das Signal mit der Information über einen Mausklick gesendet oder der Status des Sensors wird vom Rechner über die Kommunikationsschnittstelle 5 ausgelesen. Der Rechner 1 kann beispielsweise diesen Mausklick dem Display 2 zuordnen. Wenn sich der Mauszeiger 15 z.B. auf einem anklickbaren Fenster 9 befindet, kann damit ein Schaltvorgang oder irgendeine andere Funktion ausgelöst werden.

Bei einer Projizierung des Displays 2 in das Auge 8, so wie in Figur 2 dargestellt, erfolgt das Verfahren wie in der zuvor beschriebenen Art und Weise. Unterschiede bestehen nur darin, dass das Display 2 hier nicht materiell existiert, sondern direkt in das Auge 8 eines Benutzers projiziert wird.

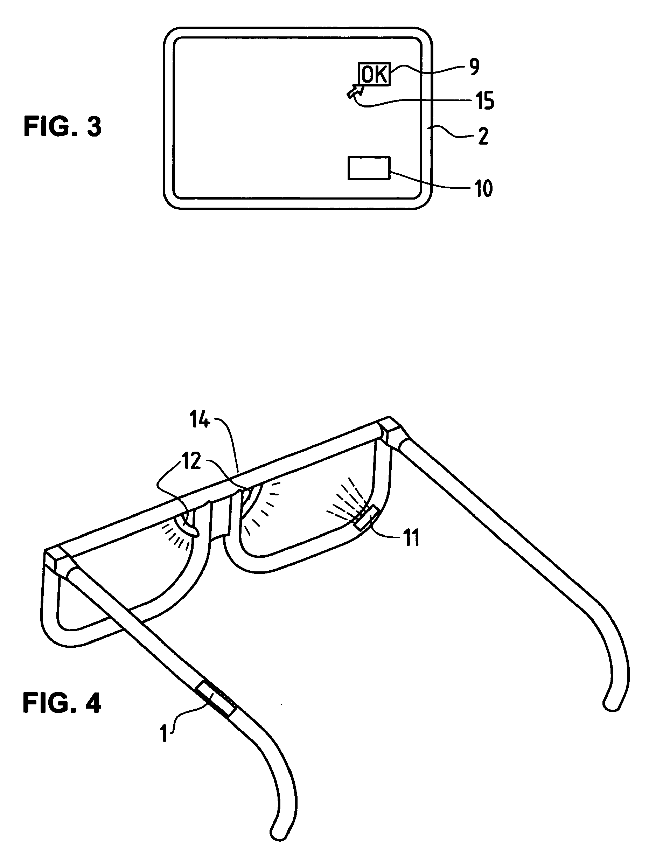

In Figur 3 ist zusätzlich zu einem anklickbaren Fenster 9 ein weiteres Fenster 10 dargestellt, wobei durch die Ausrichtung des Blickes auf dieses Fenster 10 und damit der Überdeckung des Mauszeigers 15 mit diesem Fenster 10 die tragbare Vorrichtung 3 aus einem Energiesparmodus bzw. aus einem Idle-Modus aktiviert werden kann.

In Figur 4 ist eine Brille dargestellt, in die der Rechner 1, die Einrichtung zur Erstellung des Retinal-Scaning-Displays 12 und die Einrichtung zur Durchführung des Eye-Tracking-Systems 11 integriert sind. Dabei können die Einrichtungen auch andere Positionen in oder am Brillengestell annehmen. Des weiteren können auch mehrere Einrichtungen zur Durchführung des Eye-Tracking-Systems 11 in der Brille 14 integriert sein. Das Retinal-Scaning-Display und das Eye-Tracking-System können beispielsweise auch in einem kombinierten Element, z.B. in einem MEMS (Micro-electromechanical system) Element, angeordnet sein, wobei das Eye-Tracking-System beispielsweise auf der Basis eines Infrarot-Lasers realisiert sein kann. Dies hat den Vorteil, dass die Teile für die Bildprojektion und das Tracking exakt aufeinander abgestimmt werden können und stark miniaturisiert hergestellt werden können.

## Patentansprüche

1. Verfahren zur Erfassung eines Koordinateneingabepunktes (15) mit einer tragbaren Vorrichtung (3), welche tragbare Vorrichtung (3) zumindest einen aktivierbaren Sensor (4) und eine Kommunikationsschnittstelle (5) aufweist, wobei der Koordinateneingabepunkt (15) mittels der Erfassung der Blickrichtung eines menschlichen Auges (8) bestimmt, und durch Aktivierung des Sensors (4) an der tragbaren Vorrichtung (3) selektiert wird, **dadurch gekennzeichnet,**
**dass** der Koordinateneingabepunkt (15) auf einem Display (2) dargestellt wird, und
**dass** mit der Ausrichtung des Auges (8) auf ein bestimmtes Fenster (10) auf dem Display (2) die tragbare Vorrichtung (3) aus einem Idle-Modus aktiviert wird.

2. Verfahren nach Anspruch 1, **dadurch gekennzeichnet, dass** die Blickrichtung des Auges (8) mittels einem Eye-Tracking-System erfasst wird.

3. Verfahren nach Anspruch 1 oder 2, **dadurch gekennzeichnet, dass** das Display (2) durch die Projektion von Bilddaten mittels einem Retinal-Scanning-Display (12) in das Auge (8) erzeugt wird.

4. Verfahren nach einem der Ansprüche 1 bis 3, **dadurch gekennzeichnet, dass** die Aktivierung des Sensors (4) durch mechanische, optische, kapazitive, induktive, und/oder thermische Mittel erfolgt.

5. Verfahren nach einem der Ansprüche 1 bis 4, **dadurch gekennzeichnet, dass** die tragbare Vorrichtung einen Energiespeicher (6) und/oder eine Verarbeitungselektronik (7) aufweist.

6. Verfahren nach einem der Ansprüche 1 bis 5, **dadurch gekennzeichnet, dass** die Kommunikation der Kommunikationsschnittstelle an der tragbaren Vorrichtung (3) über Bluetooth, RFID oder über eine andere drahtlose Schnittstelle erfolgt.

7. Verfahren nach einem der Ansprüche 1 bis 5, **dadurch gekennzeichnet, dass** die Kommunikation der Kommunikationsschnittstelle an der tragbaren Vorrichtung (3) über eine kabelgebundene Schnittstelle erfolgt.

8. Verfahren nach einem der Ansprüche 4 bis 7, **dadurch gekennzeichnet, dass** das Eye-Tracking-System und/oder der Retinal-Scanning-Display Daten über mindestens eine drahtlose Schnittstelle und/oder über mindestens eine kabelgebundene Schnittstelle übertragen.

9. Verfahren nach einem der Ansprüche 1 bis 8, **dadurch gekennzeichnet, dass** als tragbare Vorrichtung (3) ein an einem Finger tragbarer Ring verwendet wird.

10. Verfahren nach einem der Ansprüche 1 bis 9, **dadurch gekennzeichnet, dass** die Kommunikation der Kommunikationsschnittstelle an der tragbaren Vorrichtung (3) zu und/oder von einem Rechner (1) erfolgt.

11. Verfahren nach einem der Ansprüche 1 bis 10, **dadurch gekennzeichnet, dass** ein Mauszeiger (15) die aktuelle Blickrichtung des menschlichen Auges (8) markiert und dass die Aktivierung des Sensors (4) einem Maus-Klick entspricht.

12. System zur Durchführung des Verfahrens nach Anspruch 1, umfassend eine tragbare Vorrichtung (3) mit einem aktivierbaren Sensor (4) und einer Kommunikationsschnittstelle (5), sowie eine Vorrichtung zur Erfassung der Blickrichtung eines menschlichen Auges (8), wobei der Koordinateneingabepunkt (15) auf einem Display (2) darstellbar ist, und wobei die tragbare Vorrichtung (3) mit der Ausrichtung des Auges (8) auf ein bestimmtes Fenster (10) auf dem Display (2) aus einem Idle-Modus aktivierbar ist.

13. System nach Anspruch 12, **dadurch gekennzeichnet, dass** die Vorrichtung zur Erfassung der Blickrichtung eines menschlichen Auges (8) ein Eye-Tracking-System ist.

14. System nach Anspruch 12 oder 13, **dadurch gekennzeichnet, dass** das Display (2) durch die Projektion von Bilddaten mittels einem Retinal-Scaning-Display (12) in das Auge (8) erzeugt wird.

15. System nach einem der Ansprüche 12 bis 14, **dadurch gekennzeichnet, dass** der Sensor (4) mittels mechanischer, optischer, kapazitiver und/oder thermischer Mittel aktivierbar ist.

16. System nach einem der Ansprüche 12 bis 15, **dadurch gekennzeichnet, dass** die tragbare Vorrichtung (3) zusätzlich einen Energiespeicher (6) und/oder eine Verarbeitungselektronik (7) umfasst.

17. System nach einem der Ansprüche 12 bis 16, **dadurch gekennzeichnet, dass** die Kommunikationsschnittstelle (5) eine Bluetooth-Schnittstelle, eine RFID-Schnittstelle oder eine andere drahtlose Schnittstelle ist.

18. System nach einem der Ansprüche 12 bis 16, **dadurch gekennzeichnet, dass** die Kommunikationsschnittstelle (5) eine kabelgebundene Schnittstelle ist.

19. System nach einem der Ansprüche 14 bis 18, **dadurch gekennzeichnet, dass** Daten des Eye-Tracking-Systems und/oder des Retinal-Scanning-Displays über mindestens eine drahtlose Schnittstelle und/oder über mindestens eine kabelgebundene Schnittstelle übertragbar sind.

20. System nach einem der Ansprüche 12 bis 19, **dadurch gekennzeichnet, dass** die tragbare Vorrichtung (3) ein an einem Finger tragbarer Ring ist.

21. System nach einem der Ansprüche 12 bis 20, zusätzlich umfassend einen Rechner (1) mit Mittel zur Verbindung mit der Kommunikationsschnittstelle (5) des tragbaren Geräts (3).

22. System nach einem der Ansprüche 12 bis 21, **dadurch gekennzeichnet, dass** bei Verwendung eines Energiespeichers (6) dieser aus einem Akkumulator, einem Nanokraftwerk und/oder einer Brennstoffzelle besteht.

23. System nach Anspruch 21 oder 22, **dadurch gekennzeichnet, dass** der Rechner (1) und/oder das Retinal-Scanning-Display und/oder die Vorrichtung zur Erfassung der Blickrichtung eines menschlichen Auges (8) in einer am Kopf eines Benutzers angeordneten Einrichtung integriert sind.

## Claims

1. Method for capturing a coordinate input point (15) with a wearable device (3), which wearable device (3) has at least one activatable sensor (4) and a communication interface (5), the coordinate input point (15) being determined by means of capture of the direction of view of a human eye (8), and being selected by activating the sensor (4) on the wearable device (3), **characterised**
**in that** the coordinate input point (15) is shown on a display (2), and
**in that** with the directing of the eye (8) to a particular window (10) on the display (2) the wearable device (3) is activated out of an idle mode.

2. Method according to claim 1, **characterised in that** the direction of view of the eye (8) is captured by means of an eye tracking system.

3. Method according to claim 1 or 2, **characterised in that** the display (2) is generated through the projection of image data in the eye (8) by means of a retinal scanning display (12).

4. Method according to one of the claims 1 to 3, **characterised in that** the activation of the sensor (4) takes place through mechanical, optical, capacitive, inductive, and/or thermal means.

5. Method according to one of the claims 1 to 4, **characterised in that** the wearable device has an energy store (6) and/or processing electronics (7).

6. Method according to one of the claims 1 to 5, **characterised in that** the communication of the communication interface to the wearable device (3) takes place via Bluetooth, RFID or via another wireless interface.

7. Method according to one of the claims 1 to 5, **characterised in that** the communication of the communication interface to the wearable device (3) takes place via a wired interface.

8. Method according to one of the claims 4 to 7, **characterised in that** the eye tracking system and/or the retinal scanning display transmit data via at least one wireless interface and/or via at least one wired interface.

9. Method according to one of the claims 1 to 8, **characterised in that** used as the wearable device (3) is a ring wearable on a finger.

10. Method according to one of the claims 1 to 9, **characterised in that** the communication of the communication interface to the wearable device (3) takes place to and/or from a computer (1).

11. Method according to one of the claims 1 to 10, **characterised in that** a mouse cursor (15) marks the current direction of view of the human eye (8) and **in that** the activation of the sensor (4) corresponds to a mouse click.

12. System for carrying out the method according to claim 1, comprising a wearable device (3) with an activatable sensor (4) and a communication interface (5), as well as a device for capturing the direction of view of a human eye (8), the coordinate input point (15) being able to be shown on a display (2), and the wearable device (3) being activatable out of an idle mode by directing the eye (8) to a particular window (10) on the display (2).

13. System according to claim 12, **characterised in that** the device for capturing the direction of view of a human eye (8) is an eye tracking system.

14. System according to claim 12 or 13, **characterised in that** the display (2) is generated through the projection of image data in the eye (8) by means of a retinal scanning display (12).

15. System according to one of the claims 12 to 14, **characterised in that** the sensor (4) is activatable by means of mechanical, optical, capacitive and/or thermal means.

16. System according to one of the claims 12 to 15, **characterised in that** the wearable device (3) further comprises an energy store (6) and/or processing electronics (7).

17. System according to one of the claims 12 to 16, **characterised in that** the communication interface (5) is a Bluetooth interface, an RFID interface or another wireless interface.

18. System according to one of the claims 12 to 16, **characterised in that** the communication interface (5) is a wired interface.

19. System according to one of the claims 14 to 18, **characterised in that** data of the eye tracking system and/or of the retinal scanning display are transmittable via at least one wireless interface and/or via at least one wired interface.

20. System according to one of the claims 12 to 19, **characterised in that** the wearable device (3) is a ring wearable on a finger.

21. System according to one of the claims 12 to 20, further comprising a computer (1) with means of connection to the communication interface (5) of the wearable device (3).

22. System according to one of the claims 12 to 21, **characterised in that** with use of an energy store (6) this energy store consists of an accumulator, a nano powerhouse and/or a fuel cell.

23. System according to claim 21 or 22, **characterised in that** the computer (1) and/or the retinal scanning display and/or the device for capturing the direction of view of a human eye (8) are integrated in a device disposed on the head of a user.

## Revendications

1. Procédé pour la saisie d'un point d'entrée de coordonnées (15) à l'aide d'un dispositif portable (3), dispositif portable qui présente au moins un capteur activable (4) et une interface de communication (5), le point d'entrée de coordonnées (15) étant défini au moyen de la saisie de la direction de regard d'un oeil humain (8) et étant sélectionné par activation du capteur (4) sur le dispositif portable (3), **caractérisé en ce que**
le point d'entrée de coordonnées (15) est affiché sur un écran (2) et
**en ce qu'**avec l'orientation de l'oeil (8) sur une fenêtre particulière (10) de l'écran (2), le dispositif portable (3) est activé de son mode inactif.

2. Procédé selon la revendication 1, **caractérisé en ce que** le sens du regard de l'oeil est saisi au moyen d'un système d'oculométrie.

3. Procédé selon la revendication 1 ou 2, **caractérisé en ce que** l'affichage (2) est généré dans l'oeil (8) par la projection de données d'images au moyen d'un affichage de balayage de la rétine (12).

4. Procédé selon l'une des revendications 1 à 3, **caractérisé en ce que** l'activation du capteur (4) s'effectue par des moyens mécaniques, capacitifs, inductifs et/ou thermiques.

5. Procédé selon l'une des revendications 1 à 4, **caractérisé en ce que** le dispositif portable présente un réservoir d'énergie (6) et/ou une électronique de traitement (7).

6. Procédé selon l'un des revendications 1 à 5, **caractérisé en ce que** la communication de l'interface de communication s'effectue sur le dispositif portable (3) par Bluetooth, RFID ou une autre interface sans fil.

7. Procédé selon l'une des revendications 1 à 5, **caractérisé en ce que** la communication de l'interface de communication sur le dispositif portable (3) s'effectue par une interface câblée.

8. Procédé selon l'une des revendications 4 à 7, **caractérisé en ce que** le système d'oculométrie et/ou l'affichage de balayage de la rétine transmettent des données par au moins une interface sans fil et/ou au moins une interface câblée.

9. procédé selon l'une des revendications 1 à 8, **caractérisé en ce qu'**en tant que dispositif portable (3), on emploie une bague portée au doigt.

10. procédé selon l'une des revendications 1 à 9, **caractérisé en ce que** la communication de l'interface de communication s'effectue sur le dispositif portable (3) depuis et/ou en direction d'un ordinateur (1).

11. procédé selon l'une des revendications 1 à 10, **caractérisé en ce qu'**un curseur de souris (15) marque le sens actuel du regard de l'oeil humain (8) et **en ce que** l'activation du capteur (4) correspond à un clic de souris.

12. Système pour la mise en oeuvre du procédé selon la revendication 1, comprenant un dispositif portable (3) avec un capteur activable (4) et une interface de communication (5), ainsi qu'un dispositif pour la saisie de la direction du regard d'un oeil humain (8), le point d'entrée de coordonnées (15) étant représentable sur un écran (2) et le dispositif portable (3) étant activable depuis un modus inactif avec l'orientation de l'oeil (8) sur une fenêtre particulière (10) de l'écran (2).

13. Système selon la revendication 12, **caractérisé en ce que** le dispositif pour la saisie du sens du regard d'un oeil humain (8) est un système oculométrique.

14. Système selon la revendication 12 ou 13, **caractérisé en ce que** l'affichage (2) est généré dans l'oeil (8) par la projection de données d'images au moyen d'un affichage (12) de balayage de la rétine.

15. Système selon l'une des revendications 12 à 14, **caractérisé en ce que** le capteur (14) est activable par des moyens mécaniques, optiques, capacitifs et/ou thermiques.

16. Système selon l'une des revendications 12 à 15, **caractérisé en ce que** le dispositif portable (3) comprend en supplément un réservoir d'énergie (6) et/ou une technique de traitement (7).

17. Système selon l'une des revendications 12 à 16, **caractérisé en ce que** l'interface de communication (5) est une interface Bluetooth, une interface RFID ou une autre interface sans fil.

18. Système selon l'une des revendications 12 à 16, **caractérisé en ce que** l'interface de communication (5) est une interface câblée.

19. Système selon l'une des revendications 14 à 18, **caractérisé en ce que** des données du système d'oculométrie et/ou de l'affichage de balayage de la rétine peuvent être transmises par au moins une interface sans fil et/ou au moins une interface câblée.

20. Système selon l'une des revendications 12 à 19, **caractérisé en ce que** le dispositif portable (3) est une bague portée au doigt.

21. Système selon l'une des revendications 12 à 20, comprenant en supplément un ordinateur (1) avec des moyens pour la connexion à l'interface de communication (5) de l'appareil portable (3).

22. Système selon l'une des revendications 12 à 21, **caractérisé en ce que** pour l'utilisation d'un réservoir d'énergie (6), celui-ci se compose d'un accumulateur, d'une centrale nanoélectrique et/ou d'une pile à combustible.

23. Système selon la revendication 21 ou 22, **caractérisé en ce que** l'ordinateur (1) et/ou l'affichage de balayage de la rétine et/ou le dispositif pour la saisie du sens du regard d'un oeil humain (8) sont intégrés dans un dispositif disposé sur la tête d'un utilisateur.
